# EUROPÄISCHE PATENTSCHRIFT

(11) **EP 2 483 831 B1**
(45) Veröffentlichungstag und Bekanntmachung des Hinweises auf die Patenterteilung: **09.11.2016**
(21) Anmeldenummer: 10760636.0
(22) Anmeldetag: 13.09.2010
(51) Int. Cl.: G06K 7/00

(54) **RFID-LESEGERÄT, RFID-SYSTEM, VERFAHREN ZUR REGELUNG DER SENDELEISTUNG EINES RFID-LESEGERÄTS UND COMPUTERPROGRAMMPRODUKT**
RFID READING DEVICE, RFID SYSTEM, METHOD FOR CONTROLLING THE TRANSMITTING POWER OF AN RFID READING DEVICE, AND COMPUTER PROGRAM PRODUCT
LECTEUR RFID, SYSTÈME RFID, PROCÉDÉ DE RÉGULATION DE LA PUISSANCE D'ÉMISSION D'UN LECTEUR RFID ET PRODUIT DE PROGRAMME INFORMATIQUE

(30) Priorität: 30.09.2009 DE 102009045186
(43) Veröffentlichungstag der Anmeldung: 08.08.2012
(60) Teilanmeldung: 16161737.8
(73) Patentinhaber: Bundesdruckerei GmbH, 10958 Berlin (DE)
(72) Erfinder: TIETKE, Markus, 12247 Berlin (DE); FRITZE, Frank, 12487 Berlin (DE); PAESCHKE, Manfred, 16348 Wandlitz (DE); FISCHER, Jörg, 13053 Berlin (DE)
(74) Vertreter: Richardt Patentanwälte PartG mbB
(86) Internationale Anmeldenummer: PCT/EP2010/063373
(87) Internationale Veröffentlichungsnummer: WO 2011/039047

(56) Entgegenhaltungen:
- EP-A1- 1 988 487
- WO-A1-2005/059808
- US-A- 4 899 036

## Beschreibung

Die Erfindung bezieht sich auf ein RFID-Lesegerät, ein RFID-System mit einem RFID-Lesegerät und einem Dokument, ein Verfahren zur Regelung der Sendeleistung eines RFID-Lesegeräts sowie ein Computerprogrammprodukt.

Aus dem Stand der Technik sind verschiedene Funk-Erkennungssysteme bekannt, die auch als Radio Frequency Identification (RFID) Systeme bezeichnet werden. Aus dem Stand der Technik sind RFID-Systeme an sich bekannt, bei denen mittels induktiver Kopplung zwischen einem RFID-Lesegerät und einem RFID-Transponder eine Kommunikation erfolgt. Ebenfalls an sich bekannt ist, dass es sich bei dem RFID-Token um einen passiven RFID- Transponder ohne eigene Energieversorgung handeln kann, wobei ein passiver RFID- Transponder die für seinen Betrieb erforderliche elektrische Energie aus dem von dem RFID-Lesegerät erzeugten Feld durch induktive Einkopplung bezieht.

Vorbekannte RFID-Systeme beinhalten im Allgemeinen zumindest einen Transponder und ein RFID-Lesegerät, d.h. eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet.

Die in einem RFID-Transponder gespeicherten Daten werden über das magnetische Wechselfeld verfügbar gemacht. Bei niedrigen Frequenzen geschieht dies induktiv über ein Nahfeld.

Ein RFID-Transponder beinhaltet üblicherweise einen Mikrochip und eine Antenne, die in einem Träger oder Gehäuse untergebracht oder auf ein Substrat aufgedruckt sind. Im Gegensatz zu passiven RFID-Transpondern verfügen aktive RFID-Transponder ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einem RFID-Interface ausgestattet sein. Entsprechende Chipkarten-Kommunikationsprotokolle und -verfahren sind zum Beispiel in der Norm ISO 14443 festgelegt.

Die EP 1 988 487 A1 beschreibt ein Verfahren zum Betreiben eines berührungslosen Chipkartenlesegeräts mit mindestens zwei Betriebsmodi. Das Verfahren ist dadurch gekennzeichnet, dass das Chipkartenlesegerät in einem Standby-Modus automatisch in einen Lesemodus umgeschaltet wird, wenn das
Vorhandensein einer kontaktlosen Chipkarte in der Nähe des Chipkartenlesegeräts erfasst wird. Zusätzlich werden ein Chipkartenlesegerät und eine Chipkarte beschrieben.

Der Erfindung liegt demgegenüber die Aufgabe zugrunde, ein verbessertes RFID-Lesegerät, ein RFID-System, ein Verfahren zur Regelung der Sendeleistung eines RFID-Lesegeräts sowie ein entsprechendes Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein RFID-Lesegerät mit Sendemitteln zur Erzeugung eines Feldes zur induktiven Kopplung mit einem RFID-Transponder geschaffen. Das RFID-Lesegerät beinhaltet Messungsmitteln zur Messung einer Feldstärke des Felds, und Regelungsmitteln zur Regelung der Sendeleistung in Abhängigkeit von der gemessenen Feldstärke.

Ausführungsformen der Erfindung sind besonders vorteilhaft, da die Leistungsaufnahme des RFID-Lesegeräts verringert werden kann. Anders als im Stand der Technik üblich wird nämlich das RFID-Lesegerät nicht mit konstanter Sendeleistung betrieben, sondern die Sendeleistung wird in Abhängigkeit von der gemessenen Feldstärke geregelt. Da die gemessene Feldstärke von Vorhandensein bzw. Nichtvorhandensein des RFID-Transponders und ggf. von dessen aktuell sekundärseitig gebildeten Last abhängt, kann die Sendeleistung an den tatsächlichen Leistungsbedarf des RFID-Transponders angepasst und so im Durchschnitt reduziert werden.

Nach einer Ausführungsform der Erfindung sind die Regelungsmittel so ausgebildet, dass die Sendemittel mit einer ersten Sendeleistung betrieben werden, sodass ohne sekundärseitige Last eine erste Feldstärke resultiert, wobei die gemessene Feldstärke mit einem ersten Schwellwert verglichen wird, und dass die Sendemittel mit einer zweiten Sendeleistung betrieben werden, wenn der erste Schwellwert unterschritten wird, wobei die zweite Sendeleistung größer als die erste Sendeleistung ist.

Ausführungsformen der Erfindung sind besonders vorteilhaft, da die Leistungsaufnahme des RFID-Lesegeräts weiter reduziert werden kann. Solange sich noch kein RFID-Transponder innerhalb der Reichweite der Sendemittel befindet, wird das RFID-Lesegerät mit der ersten Sendeleistung betrieben. Die Einbringung eines RFID-Transponders in die Reichweite der Sendemittel wird seitens des RFID-Lesegeräts durch ein Absinken der resultierenden Feldstärke detektiert, indem die gemessene Feldstärke mit dem ersten Schwellwert verglichen wird.

Der RFID-Transponder bildet nämlich für die Sendemittel aufgrund der induktiven Kopplung eine Last, die bei konstanter erster Sendeleistung zu einem Rückgang der gemessenen Feldstärke führt. Die Sendeleistung wird daraufhin auf die zweite Sendeleistung heraufgesetzt, um den RFID-Transponder mit ausreichend Leistung zu versorgen.

Besonders vorteilhaft ist hierbei, dass das RFID-Lesegerät mit einer minimalen ersten Sendeleistung betrieben werden kann, solange sich kein RFID-Transponder innerhalb der Reichweite der Sendemittel befindet, und dass nur dann, wenn sich tatsächlich ein RFID-Transponder innerhalb der Reichweite der Sendemittel befindet, die Sendeleistung auf die zweite Sendeleistung erhöht werden muss.

Dies ist insbesondere dann ganz besonders vorteilhaft, wenn es sich bei dem RFID-Lesegerät um ein batteriebetriebenes Lesegerät handelt, da so die Batteriestandzeit ganz erheblich verlängert werden kann. Insbesondere kann das RFID-Lesegerät in einem portablen elektronischen Gerät integriert sein, wie zum Beispiel in einem Mobiltelefon, insbesondere einem sogenannten Smartphone, einem Personal Digital Assistant (PDA), einem portablen Computer, insbesondere einem Laptopcomputer.

Nach einer Ausführungsform der Erfindung kann das RFID-Lesegerät auch zum Anschluss an ein solches portables elektronisches Gerät ausgebildet sein, um von einer Batterie des portablen elektronischen Geräts mit Energie versorgt zu werden. Bei der Batterie des RFID-Lesegeräts bzw. des portablen elektronischen Geräts kann es sich um eine Primärzelle oder um eine Sekundärzelle handeln.

Nach einer Ausführungsform der Erfindung ist die erste Feldstärke größer oder gleich einer Ansprechfeldstärke des RFID-Transponders.

Unter der "Ansprechfeldstärke" wird hierbei beispielsweise diejenige Feldstärke verstanden, bei der eine zum Anschwingen eines Oszillators des RFID-Transponders ausreichende Leistung in den RFID-Transponder eingekoppelt wird. Die Ansprechfeldstärke ist andererseits zu gering, um eine zuverlässige Datenkommunikation zwischen dem RFID-Lesegerät und dem RFID-Transponder zu ermöglichen, d.h. der RFID-Transponder antwortet auf eine mit der Ansprechfeldstärke gesendete Anforderung des RFID-Lesegeräts nicht oder nicht korrekt. Die Ansprechfeldstärke ist also geringer als eine Betriebsfeldstärke des RFID-Transponders.

Unter der "Betriebsfeldstärke" des RFID-Transponders wird hier eine Feldstärke verstanden, die zum Aufbau einer Datenkommunikation zwischen dem RFID-Lesegerät und dem RFID-Transponder ausreichend ist. Auf eine mit der Betriebsfeldstärke von dem RFID-Lesegerät gesendete Anforderung antwortet der RFID-Token also korrekt.

Unter der "Sendeleistung" des RFID-Lesegeräts wird hier die Leistungsaufnahme der Sendemittel verstanden. Die erste Sendeleistung kann beispielsweise zwischen 10 mW und 50 mW betragen. Die erste Feldstärke kann weniger als 1,5 A/m betragen, insbesondere 0,5 - 1 A/m. Die zweite Sendeleistung kann hingegen beispielsweise zwischen 90 mW und 110 mW, insbesondere 100 mW, oder zwischen 190 mW und 210 mW, insbesondere 200 mW betragen. Die zweite Feldstärke kann mehr als 1,5 A/m, insbesondere bis zu 2,5 A/m, beispielsweise 2 A/m, betragen.

Nach einer Ausführungsform der Erfindung sind die Regelungsmittel so ausgebildet, dass nach Erhöhung der Sendeleistung auf die zweite Sendeleistung die dann gemessene Feldstärke mit einem zweiten Schwellwert verglichen wird. Wenn die gemessene Feldstärke unter den zweiten Schwellwert sinkt, so bedeutet dies, dass sich die sekundärseitige Last vergrößert hat, beispielsweise weil ein oder mehrere zusätzliche Verbraucher des RFID-Transponders bzw. des Dokuments zugeschaltet worden sind oder die Leistungsaufnahme eines Verbrauchers gestiegen ist. Um die eingekoppelte Leistung zu erhöhen, wird dann die Sendeleistung auf eine dritte Sendeleistung erhöht, wie zum Beispiel auf über 600 mW. Die resultierende dritte Feldstärke kann dann über 6 A/m betragen.

Nach einer Ausführungsform der Erfindung wird nach der Erhöhung der Sendeleistung auf die dritte Sendeleistung die dann gemessene Feldstärke mit einem dritten Schwellwert verglichen. Wenn die gemessene Feldstärke den dritten Schwellwert überschreitet, so wird die Sendeleistung auf die erste Sendeleistung reduziert.

Eine Überschreitung der dritten Schwelle resultiert nämlich dadurch, dass der RFID-Transponder außerhalb der Reichweite der Sendemittel gebracht wird, sodass die sekundärseitige Last wegfällt. Hierdurch kommt es zu einem entsprechenden Anstieg der gemessenen Feldstärke. Aufgrund der somit detektierten Entfernung des RFID-Transponders von dem RFID-Lesegerät geht dieses in seinen Grundzustand zurück, d.h. es wird mit der ersten Sendeleistung betrieben, um die erneute Einbringung eines RFID-Transponders in die Reichweite der Sendemittel zu detektieren.

Nach einer Ausführungsform der Erfindung werden nach dem Unterschreiten des ersten Schwellwerts von dem RFID-Lesegerät wiederholend Anforderungen an den RFID-Transponder gesendet. Dabei wird schrittweise die Sendeleistung erhöht, und zwar solange, bis auf eine der Anforderungen eine korrekte Antwort des RFID-Transponders durch das RFID-Lesegerät empfangen wird. Bei der so eingeregelten Sendeleistung ist also der Aufbau einer Datenkommunikation zwischen dem RFID-Lesegerät und dem RFID-Transponder möglich, d.h. bei der so eingeregelten Sendeleistung wird das RFID-Lesegerät mit der Betriebsfeldstärke des RFID-Transponders betrieben. Unter einer "Anforderung" wird beispielsweise ein Kommando oder ein sogenannter Request verstanden, beispielsweise nach einem standardisierten RFID-Datenkommunikationsverfahren.

Nach einer Ausführungsform der Erfindung wird die Sendeleistung nachgeregelt, wenn es bei der Datenkommunikation zwischen dem RFID-Lesegerät und dem RFID-Transponder zu einer oder mehreren nicht korrekten Antworten des RFID-Transponders kommt. In diesem Fall wird die Sendeleistung solange schrittweise erhöht, bis wieder auf eine Anforderung des RFID-Lesegeräts eine korrekte Antwort des RFID-Transponders empfangen wird. Eine solche Nachregelung der Sendeleistung kann insbesondere dann erforderlich sein, wenn während der Datenkommunikation ein oder mehrere Verbraucher des RFID-Transponders bzw. des Dokuments zugeschaltet werden.

Nach einer Ausführungsform der Erfindung wird während der Datenkommunikation zwischen dem RFID-Lesegerät und dem RFID-Transponder die Sendeleistung versuchsweise reduziert, da zwischenzeitlich die sekundärseitige Last reduziert worden sein könnte, insbesondere dadurch, dass ein oder mehrere Verbraucher abgeschaltet worden sind oder eine reduzierte Leistungsaufnahme haben. Beispielsweise wird die Sendeleistung schrittweise solange erniedrigt, bis auf eine Anforderung des RFID-Lesegeräts an den RFID-Transponder eine nichtkorrekte Antwort empfangen wird. Wenn dies der Fall ist, wird die Sendeleistung wieder solange erhöht, beispielsweise um ein Inkrement, bis auf eine Anforderung des RFID-Lesegeräts wieder eine korrekte Antwort des RFID-Transponders erfolgt. Die versuchsweise Verringerung der Sendeleistung kann dabei wiederholend nach vorgegebenen Zeitintervallen von zum Beispiel einigen Sekunden oder Minuten vorgenommen werden, oder nachdem eine bestimmte Anzahl von Anforderungen, die jeweils eine korrekte Antwort zur Folge hatten, von dem RFID-Lesegerät gesendet worden sind.

Nach einer Ausführungsform der Erfindung wird die Sendeleistung in vorgegebenen Sendeleistungsinkrementen schrittweise erhöht, nachdem die gemessene Feldstärke unter den ersten Schwellwert gefallen ist. Die Erhöhung der Sendeleistung um ein Sendeleistungsinkrement führt dabei zu einem entsprechenden Feldstärkeinkrement, welches durch das RFID-Lesegerät gemessen wird. Wenn das Feldstärkeinkrement größer oder gleich einem Inkrement-Schwellwert ist, so wird die Sendeleistung weiter erhöht, und zwar solange, bis ein Feldstärkeinkrement kleiner als der Inkrement-Schwellwert ist.

Wenn das Feldstärkeinkrement nämlich kleiner als der Inkrement-Schwellwert ist, so bedeutet dies, dass die sekundärseitige Last, welche der RFID-Transponder für das RFID-Lesegerät bildet, stark angestiegen ist. Ein solcher starker Anstieg der sekundärseitigen Last kann dadurch bedingt sein, dass die in den RFID-Tag eingekoppelte Spannung aufgrund der schrittweisen Erhöhung der Sendeleistung so hoch geworden ist, dass ein Überspannungsschutz des RFID-Transponders aktiviert wird, welcher zu einer starken Erhöhung der Last führt. Die Sendeleistung wird dann um zumindest ein Spannungsinkrement reduziert, wobei in den RFID-Transponder bei der so eingeregelten Sendeleistung eine maximale elektrische Leistung eingekoppelt wird. Das hierdurch erzeugte Feld kann durch das RFID-Lesegerät gemessen werden und die gemessene Feldstärke kann im Weiteren als Sollgröße für die Nachregelung der Sendeleistung verwendet werden.

In einem weiteren Aspekt betrifft die Erfindung ein RFID-System mit einer Ausführungsform eines erfindungsgemäßen RFID-Lesegeräts und einem Dokument, welches den RFID-Transponder beinhaltet.

Unter einem "Dokument" werden erfindungsgemäß papierbasierte und/oder kunststoffbasierte Dokumente verstanden, insbesondere Wert- oder Sicherheitsdokumente, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise.

Nach einer Ausführungsform der Erfindung ist ein passiver RFID-Transponder in das Dokument integriert, d.h. das Dokument hat keine eigene Energieversorgung, insbesondere keine Primärbatterie. Dies ist besonders vorteilhaft für Dokumente mit einer relativ langen Gültigkeitsdauer, da kein Wechsel einer Batterie erforderlich ist. Insbesondere ist dies für hoheitliche Dokumente besonders vorteilhaft.

Nach einer Ausführungsform der Erfindung hat das Dokument zumindest einen zuschaltbaren Verbraucher, wie zum Beispiel eine Anzeigevorrichtung oder einen Sensor.

Bei der Anzeigevorrichtung kann es sich um eine elektrophoretische Anzeige, eine elektrochrome Anzeige, eine Elektrowetting-Anzeige, eine bistabile Anzeige, eine Drehelementanzeige, eine LCD-Anzeige oder eine OLED-Anzeige handeln. Die Anzeigevorrichtung kann in den Kartenkörper integriert sein und/oder eine bauliche Einheit mit dem RFID-Transponder bilden. Die Anzeigevorrichtung kann auch über elektrische Leitungen innerhalb des Dokumentenkörpers mit dem RFID-Transponder verbunden sein, um von dem RFID-Transponder mit elektrischer Energie versorgt zu werden.

Bei dem elektrischen Verbraucher kann es sich um einen Sensor handeln, wie zum Beispiel zur Erfassung eines biometrischen Merkmals und/oder Zurverfügungstellung eines Manipulandums zur Realisierung einer Nutzer-Schnittstelle. Beispielsweise kann der Sensor als Fingerabdrucksensor oder als Kamera zur Erfassung eines Irisscan oder für eine Gesichtsbiometrie ausgebildet sein.

Der Sensor kann ebenfalls als separate Komponente in dem Dokumentenkörper integriert sein oder eine bauliche Einheit mit dem RFID-Transponder bilden.

Die Integration eines RFID-Transponders, einer Anzeigevorrichtung und/oder eines Sensors in ein Dokument ist an sich aus dem Stand der Technik bekannt, vergleiche beispielsweise WO 2009/062853, WO 2009/062869, WO 2009/062860, WO 2009/062870, WO 2009/062861, WO 2009/062827, WO 2009/062892, WO 2009/062893, WO 2009/062788, WO 2009/062810, WO 2009/062855, WO 2009/053249, WO 2009/062832.

Je nach Anwendungsfall können ein oder mehrere Verbraucher des RFID-Transponders zugeschaltet oder abgeschaltet werden, sodass sich ein entsprechend zeitlich variierender Leistungsbedarf ergibt, der in den RFID-Transponder eingekoppelt werden muss. Ferner kann auch während des Betriebs eines Verbrauchers dessen Leistungsaufnahme schwanken; beispielsweise kann die Leistungsaufnahme eines emissiven Displays von dem gerade wiedergegebenen Bild abhängen.

Ausführungsformen der Erfindung sind besonders vorteilhaft, da die in den RFID-Transponder eingekoppelte Leistung von dem aktuellen Leistungsbedarf des RFID-Transponders abhängt, also beispielsweise nur so viel Leistung in den RFID-Transponder eingekoppelt wird, wie auch tatsächlich benötigt wird. Wenn beispielsweise lediglich der Prozessor des RFID-Transponders zu betreiben ist, wird weniger Energie eingekoppelt als wenn auch zusätzlich der Verbraucher mit Energie versorgt werden muss. Dadurch kann ein aufwendiges Powermanagement und die Abführung von größeren Verlustleistungen seitens des Dokuments vermieden werden.

In einem weiteren Aspekt betrifft die Erfindung ein Verfahren zur Regelung der Sendeleistung eines RFID-Lesegeräts mit folgenden Schritten: Betrieb des RFID-Lesegeräts mit einer ersten Sendeleistung, sodass sich eine erste Feldstärke einstellt, solange sich der RFID-Transponder nicht innerhalb der Reichweite der Sendemittel befindet, Messung der Feldstärke zur Detektion einer Einbringung des RFID-Transponders in die Reichweite der Sendemittel, wobei aufgrund der Einbringung des RFID-Transponders in die Reichweite der Sendemittel die gemessene Feldstärke unter einen ersten Schwellwert sinkt, wobei die Feldstärke des Felds durch Messungsmitteln des RFID-Lesegeräts gemessen wird, die ein digitales Signal aus einer von einem Spannungsteiler mit zwei Widerständen an einer Antenne eines Schwingkreises abgegriffenen Spannung über einen Hüllkurvendetektor und einen Analog/Digital-Wandler erzeugen, wobei das digitale Signal den aktuellen Wert der Spannung und damit der Feldstärke repräsentiert, wobei das digitale Signal in Reglungsmittel des RFID-Lesegeräts zur Regelung der Sendeleistung in Abhängigkeit von der gemessenen Feldstärke als Messgröße für die Durchführung einer Regelung eingegeben wird, und Betrieb des RFID-Lesegeräts mit einer zweiten Sendeleistung, wenn die gemessene Feldstärke den ersten Schwellwert unterschritten hat, wobei die zweite Sendeleistung größer als die erste Sendeleistung ist.

In einem weiteren Aspekt betrifft die Erfindung ein Computerprogrammprodukt nach Anspruch 15, insbesondere ein digitales Speichermedium mit ausführbaren Programminstruktionen zur Durchführung einer Ausführungsform des erfindungsgemäßen Verfahrens.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen RFID-Systems,
- Figur 2: ein Schaltbild einer Ausführungsform eines erfindungsgemäßen RFID-Lesegeräts,
- Figur 3: ein Schaltbild einer weiteren Ausführungsform eines erfindungsgemäßen RFID-Lesegeräts,
- Figur 4: ein Flussdiagramm einer Ausführungsform eines erfindungsgemäßen Verfahrens,
- Figur 5: ein Flussdiagramm einer Ausführungsform eines erfindungsgemäßen Verfahrens,
- Figur 6: ein Blockdiagramm einer Ausführungsform eines Dokuments mit integriertem ID-Token,
- Figur 7: ein Flussdiagramm einer Ausführungsform eines erfindungsgemäßen Verfahrens.

Im Weiteren werden einander entsprechende Elemente jeweils mit denselben Bezugszeichen gekennzeichnet.

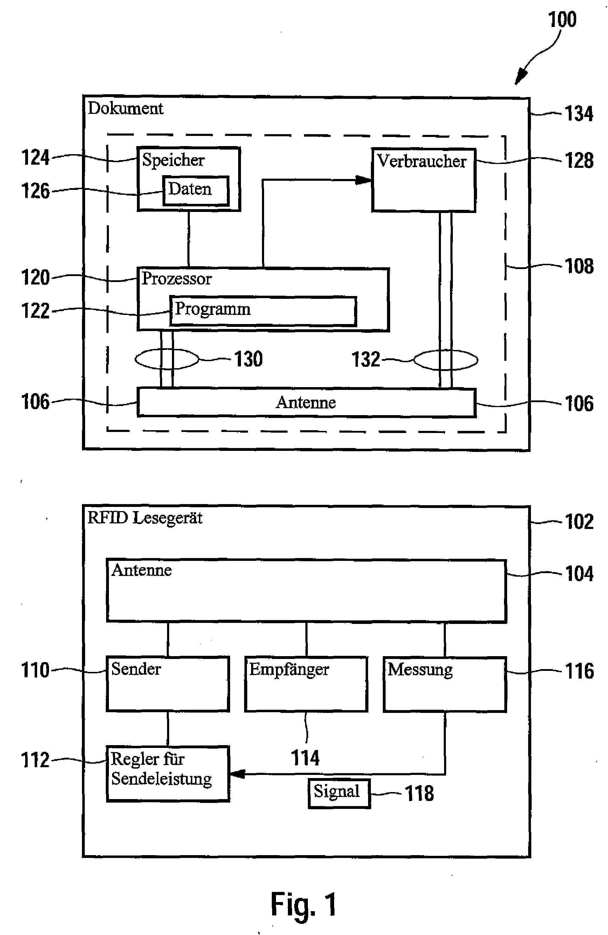

Die Figur 1 zeigt ein RFID-System 100. Zu dem RFID-System 100 gehört ein RFID-Lesegerät 102 und ein Dokument 134 mit einem integrierten RFID-Transponder 108. Das RFID-Lesegerät 102 hat zumindest eine Antenne 104 zur induktiven Kopplung mit einer Antenne 106 eines RFID-Transponders 108.

Das RFID-Lesegerät 102 hat ferner einen Sender 110, der mit der Antenne 104 gekoppelt ist, sowie einen Regler 112 zur Regelung der Sendeleistung des Senders 110. Die Antenne 104 ist ferner mit einem Empfänger 114 verbunden.

Ferner hat das RFID-Lesegerät 102 eine Komponente 116, die mit der Antenne 104 gekoppelt ist, um die durch das RFID-Lesegerät 102 erzeugte Feldstärke zu messen. Die Komponente 116 erzeugt ein Signal 118, welches in den Regler 112 als Messgröße für die Durchführung der Regelung eingegeben wird.

Der RFID-Transponder 108 beinhaltet einen Prozessor 120 zur Ausführung von Programminstruktionen 122 und einen Speicher 124 zur Speicherung von Daten 126. Bei dem Speicher 124 handelt es sich um einen nichtvolatilen Speicher. Durch Ausführung der Programminstruktionen 122 kann der Prozessor 120 auf die Daten 126 zugreifen, um diese an das RFID-Lesegerät 102 zu senden. Zum Schutz der Daten gegen unbefugtes Auslesen kann eine sogenannte Basic Access Control und/oder eine Extended Access Control vorgesehen sein, wie es an sich aus dem Stand der Technik bekannt ist (vgl. beispielsweise DE 10 2005 025 806).

Der RFID-Transponder 108 hat ferner zumindest einen Verbraucher 128. Bei dem Verbraucher 128 kann es sich beispielsweise um eine Anzeigevorrichtung oder einen Sensor handeln. Der Verbraucher 128 hat eine variable Leistungsaufnahme. Beispielsweise kann der Verbraucher 128 zu- und abschaltbar sein, wobei der Prozessor durch Ausführung der Programminstruktionen 122 entsprechende Schaltsignale generieren kann.

Bei dem Verbraucher kann es sich zum Beispiel um ein in das Dokument 134 integriertes OLED-Display, handeln. In diesem Fall kann das RFID-Lesegerät 102 eine Anforderung an den RFID-Transponder 108 senden, um die Anzeige eines Bildes, wie zum Beispiel eines Passfotos, des Trägers des Dokuments 100, anzufordern. Durch Ausführung der Programminstruktionen 122 wird der Verbraucher 128, d.h. hier das Display, zugeschaltet, um dieses zur Wiedergabe entsprechender Bilddaten, die in dem Speicher 124 gespeichert sein können, anzusteuern. Die Leistungsaufnahme des Displays kann dabei von dem wiederzugebenden Bild abhängen, insbesondere wenn es sich bei dem Display um ein emissives Display handelt.

Der Prozessor 120 ist über Leitungen 130 mit der Antenne 106 verbunden sowie auch der Verbraucher 128, der über Leitungen 132 mit der Antenne 106 verbunden ist.

Die Antenne 106, der Prozessor 120, der Speicher 124 und/oder der Verbraucher 128 können als diskrete Bauelemente ausgebildet sein oder ganz oder teilweise als integrierte Schaltung ausgebildet sein.

Die Antennen 104 und 106 sind für eine induktive Kopplung ausgebildet, wobei es sich bei der Antenne 104 um die Primärseite und bei der Antenne 106 um die Sekundärseite, d.h. die Last, handelt. Der Sender 110 ist so ausgebildet, dass ein magnetisches Feld mit einer Trägerwelle von beispielsweise 13,56 MHz von der Antenne 104 erzeugt wird. Diese Trägerwelle wird in die Antenne 106 induktiv eingekoppelt, sodass an der Antenne 106 eine Spannung abfällt, die über die Leitungen 130 bzw. 132 zur Spannungsversorgung des Prozessors 120 und des Verbrauchers 128, wenn dieser zugeschaltet ist, dient.

Der RFID-Transponder 108 ist in ein Dokument 134 integriert. Bei dem Dokument 134 kann es sich beispielsweise um einen elektronischen Personalausweis oder ein anderes elektronisches Ausweisdokument handeln. Der RFID-Transponder 108 ist in einem Dokumentenkörper des Dokuments 134 integriert. Das Dokument 134 kann schichtförmig aufgebaut sein, wobei der RFID-Transponder 108 eine der Schichten des Dokuments 134 bildet.

Bei dem RFID-Lesegerät 102 handelt es sich vorzugsweise um ein portables batteriebetriebenes Gerät. Das RFID-Lesegerät 102 kann einen integralen Bestandteil eines portablen batteriebetriebenen Geräts mit weiteren Funktionen bilden, wie zum Beispiel eines Mobiltelefons, eines Funkgeräts für den behördlichen Einsatz oder dergleichen.

Solange sich das Dokument 134 nicht innerhalb der Reichweite der Antenne 104 des RFID-Lesegeräts 102 befindet, d.h. innerhalb einer Entfernung von beispielsweise mehr als 20 cm bis 30 cm, wird der Sender 110 mit einer minimalen ersten Sendeleistung betrieben, die durch den Regler 112 vorgegeben wird. Aufgrund dieser ersten Sendeleistung wird von der Antenne 104 ein Feld mit einer ersten Feldstärke im Bereich der Ansprechfeldstärke des RFID-Transponders 108 erzeugt. Ferner wird durch die Komponente 116 fortlaufend die Feldstärke gemessen und die entsprechende Feldstärkewerte werden mit den Signalen 118 in den Regler 112 eingegeben.

Der Regler 112 ist so ausgebildet, dass er die von der Komponente 116 gemessene Feldstärke mit einem ersten Schwellwert vergleicht. Sobald der Regler eines der Signale 118 empfängt, in dem ein Messwert für die gemessene Feldstärke angegeben ist, der unterhalb dieses ersten Schwellwerts liegt, so erhöht der Regler 112 die Sendeleistung des Senders 110 auf eine zweite Sendeleistung.

Dieser Fall trifft dann ein, wenn das Dokument 134 in die Reichweite der Antenne 104 gebracht wird, sodass eine hinreichend starke induktive Kopplung zwischen den Antennen 104 und 106 vorliegt. Die dann durch das von dem RFID-Lesegerät 102 erzeugte, in den RFID-Transponder eingekoppelte Energie reicht aus, um den Prozessor 120 bzw. einen Oszillator des Prozessors 120, der ein Clocksignal zur Verfügung stellt, zum Anschwingen zu bringen. Hierdurch steigt die sekundärseitige Last an, sodass die Feldstärke unter den ersten Schwellwert abfällt. Dieser Abfall der Feldstärke wird durch die Komponente 116 erfasst und an den Regler 112 signalisiert, der daraufhin die Sendeleistung auf die zweite Sendeleistung erhöht, sodass dann von dem RFID-Lesegerät 102 ein Feld mit der für ein korrektes Arbeiten des Prozessors 120 erforderlichen erste Betriebsfeldstärke erzeugt wird. Nach der Erhöhung der Sendeleistung auf die zweite Sendeleistung wird durch den Regler 112 geprüft, ob die von der Komponente 116 gemessene Feldstärke unter einen zweiten Schwellwert abfällt. Alternativ oder zusätzlich wird diese Betriebsfeldstärke als Sollgröße für die Regelung der Sendeleistung verwendet, wobei fortlaufend die Feldstärke gemessen wird.

Der Sender 110 kann dann zum Beispiel eine Anforderung an den RFID-Transponder 108 zum Lesen der Daten 126 aus dem Speicher 124 senden. Diese Anforderung wird über die Antenne 106 von dem RFID-Transponder 108 empfangen und durch Ausführung der Programminstruktionen 122 verarbeitet. Durch Ausführung der Programminstruktionen 122 wird auf die Daten 126 zugegriffen, um diese aus dem Speicher 124 auszulesen, und um eine Antwort mit den angeforderten Daten an das RFID-Lesegerät 102 zu senden. Hierfür kann die Durchführung eines Basic Access Control- und/oder Extended Access Control-Verfahrens erforderlich sein, um die Daten 126 gegen unbefugte Zugriffe zu schützen. Die Antwort des RFID-Transponders 108 wird über die Antenne 104 durch den Empfänger 114 des RFID-Lesegeräts 102 empfangen.

Beispielsweise kann eine Voraussetzung für ein Auslesen der Daten 126 sein, dass zuvor eine biometrische Authentifizierung des Trägers des Dokuments 134 erfolgt. In diesem Fall kann der Verbraucher 128 als Fingerabdrucksensor ausgebildet sein, um den Fingerabdruck des Trägers des Dokuments 134 zu erfassen. Nach Empfang der Anforderung zum Lesen der Daten 126 von dem RFID-Lesegerät 102 wird dann durch Ausführung der Programminstruktionen 122 der Verbraucher zugeschaltet, um den Träger des Dokuments 134 die biometrische Authentifizierung, d.h. die Erfassung seines Fingerabdrucks, zu ermöglichen.

Durch die Zuschaltung des Verbrauchers 128 steigt die sekundärseitige Last weiter an, sodass das Feld unter den zweiten Schwellwert abfällt. Dies wird von der Komponente 116 erfasst und an den Regler 112 signalisiert. Der Regler 112 erhöht daraufhin die Sendeleistung auf eine dritte Sendeleistung.

Aufgrund der dritten Sendeleistung wird durch das RFID-Lesegerät 102 ein Feld erzeugt, welches hinreichend stark ist, um die für den Betrieb des Verbrauchers 128 erforderliche Leistung in den RFID-Token 108 einzukoppeln. Dies ermöglicht dann also eine Erfassung der Fingerabdruckdaten mittels des Verbrauchers 128.

Bei hinreichender Übereinstimmung der Fingerabdruckdaten mit einem beispielsweise in einem geschützten Speicherbereich des Speichers 124 gespeicherten Referenzwert gilt die Biometrieprüfung als bestanden, sodass der Lesezugriff auf die Daten 126 durchgeführt wird, wobei hierfür je nach Ausführungsform die Erfüllung weiterer Bedingungen erforderlich sein kann.

Durch die Erhöhung der Sendeleistung auf die zweite Sendeleistung steigt die von dem RFID-Lesegerät 102 erzeugte Feldstärke auf eine zweite Betriebsfeldstärke, bei der genügend Leistung in den RFID-Transponder 108 eingekoppelt wird, um sowohl den Prozessor 120 als auch den zugeschalteten Verbraucher 128 zu betreiben. Der Regler prüft dann, ob die Feldstärke einen dritten Schwellwert überschreitet, wobei der dritte Schwellwert größer als die zweite Betriebsfeldstärke ist.

Wird nämlich das Dokument 134 aus der Reichweite des RFID-Lesegeräts 102 entfernt, so entfällt die sekundärseitige Last, und die Feldstärke steigt dementsprechend an, sodass der dritte Schwellwert überschritten wird. Hierdurch wird also die Entfernung des Dokuments 134 von dem RFID-Lesegerät detektiert.

Das RFID-Lesegerät 102 geht daraufhin in seinen Ausgangszustand über, indem der Regler 112 zum Betrieb des Senders 110 die erste Sendeleistung festlegt. Bei der hier betrachteten Ausführungsform ist von besonderem Vorteil, dass das RFID-Lesegerät 102 mit einer minimalen Leistungsaufnahme betrieben werden kann, solange sich noch kein Dokument 134 innerhalb der Reichweite der Antenne 104 befindet. Nur dann, wenn die Einbringung des Dokuments 134 in die Reichweite der Antenne 104 aufgrund des Abfalls der Feldstärke durch den Regler 112 detektiert wird, wird die Leistungsaufnahme erhöht, um ein Feld mit der ersten Betriebsfeldstärke zu erzeugen.

Eine weitere Optimierung der erforderlichen Leistungsaufnahme des RFID-Lesegeräts wird dadurch erreicht, dass eine höhere zweite Sendeleistung zur Erreichung der zweiten Betriebsfeldstärke nur dann erforderlich ist, nachdem die Zuschaltung des Verbrauchers 128 aufgrund des Rückgangs der gemessenen Feldstärke unter den zweiten Schwellwert detektiert worden ist. Durch die Wahl der Sendeleistung des RFID-Lesegeräts 102 in Abhängigkeit davon, ob sich das Dokument 134 innerhalb der Reichweite der Antenne 104 befindet und, wenn dies der Fall ist, in Abhängigkeit von der Zuschaltung des Verbrauchers 128, wird die Leistungsaufnahme des RFID-Lesegeräts 102 reduziert, sodass sich die Batteriestandzeit des RFID-Lesegeräts 102 entsprechend verlängert.

Ein weiterer Vorteil dieser situationsabhängigen Wahl der Sendeleistung ist, dass nur so viel Leistung in den RFID-Transponder 108 eingekoppelt wird, wie auch tatsächlich benötigt wird, d.h. wenn beispielsweise lediglich der Prozessor 120 zu betreiben ist, wird weniger Energie eingekoppelt als wenn auch zusätzlich der Verbraucher 128 mit Energie versorgt werden muss. Dadurch kann ein aufwendiges Powermanagement und die Abführung von größeren Verlustleistungen seitens des Dokuments 134 vermieden werden.

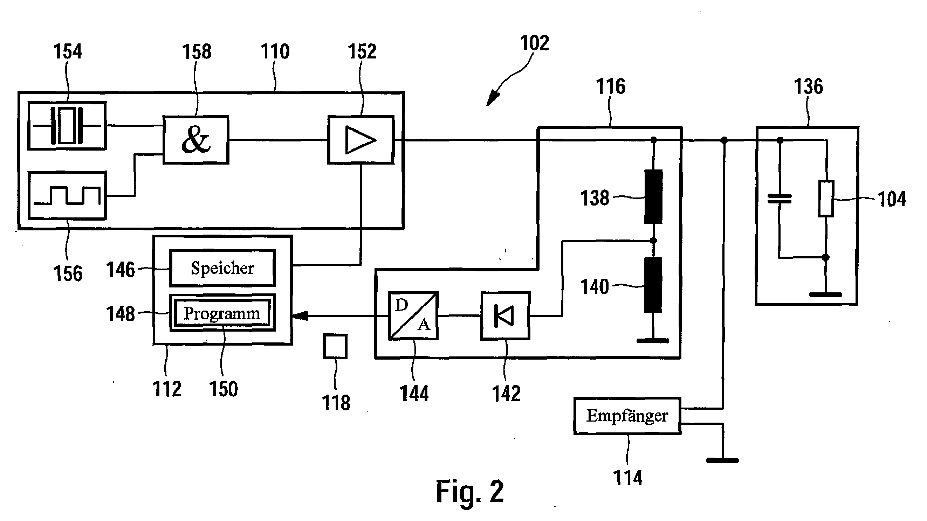

Die Figur 2 zeigt ein Prinzipschaltbild einer Ausführungsform des RFID-Lesegeräts 102. Das RFID-Lesegerät 102 hat einen Schwingkreis 136 mit der Antenne 104. Die Antenne 104 dient hier sowohl als Sende- als auch als Empfangsantenne.

Die Komponente 116 hat einen Spannungsteiler, der durch die Widerstände 138 und 140 gebildet wird. Beispielsweise beträgt der Widerstand 138 100 kΩ und der Widerstand 140 1MΩ. Der mittlere Abgriff des Spannungsteilers ist mit einem Hüllkurvendetektor 142 verbunden. Ein Ausgang des Hüllkurvendetektors 142 ist mit einem Analog/Digital-Wandler 144 verbunden. Ein Ausgang des Analog/Digital-Wandlers ist mit einem Eingang des Reglers 112 verbunden.

Durch den Spannungsteiler wird die Spannung an der Antenne 104 abgegriffen. Nach der Teilung der abgegriffenen Spannung durch den Spannungsteiler ermittelt der Hüllkurvendetektor 142 fortlaufend die Amplitude der geteilten Spannung, sodass nach der Analog/Digital-Wandlung von dem Analog/Digital-Wandler 144 das Signal 118 in den Regler 112 eingegeben wird, welches den aktuellen Wert der Spannung und damit der erzeugten Feldstärke repräsentiert.

Der Regler 112 kann zum Beispiel als ein Mikrocontroller mit einem Speicher 146 zur Speicherung von Regelungsparametern und einem Prozessor 148 zur Ausführung von Programminstruktionen 150, die eine Ausführungsform eines erfindungsgemäßen Regelungsverfahren implementieren, ausgebildet sein.

Alternativ ist auch eine schaltungstechnische Realisierung des Reglers, zum Beispiel mittels zweier Komparatoren möglich.

In dem Speicher 146 sind Verstärkungswerte für einen regelbaren Verstärker 152 gespeichert, nämlich beispielsweise ein erster Verstärkungswert zur Einstellung der ersten Sendeleistung, ein zweiter Verstärkungswert für die Einstellung der zweiten Sendeleistung und ein dritter Verstärkungswert für die Einstellung der dritten Sendeleistung. Ferner können in dem Speicher 146 auch die ersten, zweiten und dritten Schwellwerte gespeichert sein.

Zur Erzeugung der Trägerwelle von zum Beispiel 13,56 MHz dient ein Oszillator 154, der ein Signal abgibt, welches nach Verstärkung durch den Verstärker 152 über die Antenne 104 gesendet wird. Dem von dem Oszillator 154 abgegebenen Signal wird ein Datensignal 156 durch ein UND-Gatter 158 überlagert. Bei dem Datensignal 156 kann es sich um eine Anforderung an den RFID-Transponder 108 handeln.

Der Empfänger 140 des RFID-Lesegeräts 102 ist ebenfalls mit dem Schwingkreis 136 verbunden, da hier die Antenne 104 sowohl als Sendeantenne als auch als Empfangsantenne dient.

Nach dem Einschalten des RFID-Lesegeräts 102 wird die Ausführung der Programminstruktionen 150 gestartet. Diese greifen auf den ersten Verstärkungswert zu, sodass der Sender 110 mit der ersten Sendeleistung betrieben wird. Das von dem Oszillator 154 gelieferte Signal wird dann also mit der Ansprechfeldstärke von der Antenne 104 gesendet.

Durch Ausführung der Programminstruktionen 150 wird dann fortlaufend das Signal 118 mit dem ersten Schwellwert verglichen. Wenn der erste Schwellwert unterschritten wird, so bedeutet dies, dass das Dokument 134 in die Reichweite der Antenne 104 eingebracht worden ist, sodass eine sekundärseitige Last anliegt. Das Programm 150 greift daraufhin auf den zweiten Verstärkungswert zu, um den Verstärker 152 dementsprechend anzusteuern, sodass die Sendeleistung auf die zweite Sendeleistung erhöht wird.

Das von dem Oszillator 154 gelieferte Signal wird dann mit der ersten Betriebsfeldstärke von der Antenne 104 gesendet. Daraufhin kann die Datenkommunikation zwischen dem RFID-Lesegerät 102 und dem RFID-Transponder 108 (vgl. Fig. 1) beginnen, beispielsweise indem das Datensignal 156 gesendet wird.

Durch Ausführung der Programminstruktionen 150 wird nach Erhöhung der Sendeleistung auf die zweite Sendeleistung durch Auswertung des Signals 118 fortlaufend geprüft, ob die Feldstärke unter den zweiten Schwellwert abgefallen ist. Wenn dieser Fall eintritt, so bedeutet dies, dass die sekundärseitige Last erhöht worden ist, indem beispielsweise der Verbraucher 128 zugeschaltet worden ist. Daraufhin wird durch Ausführung der Programminstruktionen 150 auf den dritten Verstärkungsfaktor zugegriffen, um den Sender 110 nunmehr mit der dritten Sendeleistung zu betreiben, sodass sich die zweite Betriebsfeldstärke einstellt.

Nunmehr wird durch die Programminstruktionen 150 durch Auswertung des Signals 118 geprüft, ob der dritte Schwellwert überschritten wird. Wenn dies der Fall ist, so bedeutet das, dass das Dokument 100 aus der Reichweite der Antenne 104 entfernt worden ist, sodass aufgrund des Wegfalls der sekundärseitigen Last die Feldstärke ansteigt. Daraufhin greifen die Programminstruktionen 150 auf den ersten Verstärkungsfaktor zu, um wieder die erste Sendeleistung einzustellen. Dieser Vorgang wiederholt sich, wenn erneut das Dokument 134 oder ein anderes, prinzipiell gleich aufgebautes Dokument, in die Reichweite der Antenne 104 eingebracht wird.

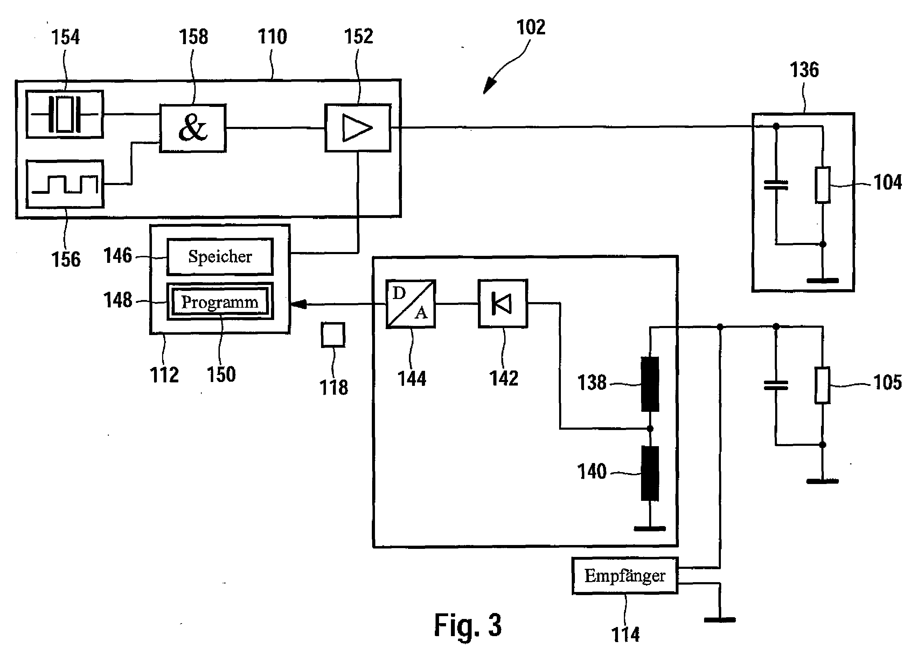

Die Figur 3 zeigt eine alternative Ausführungsform, die sich von der Figur 2 dadurch unterscheidet, dass die Antenne 104 nur als Sendeantenne dient, und eine zusätzliche Antenne 105 vorhanden ist, die nur als Empfangsantenne dient. Der Spannungsteiler ist bei dieser Ausführungsform mit der Antenne 105 verbunden, um die Feldstärke an der Antenne 105 zu messen.

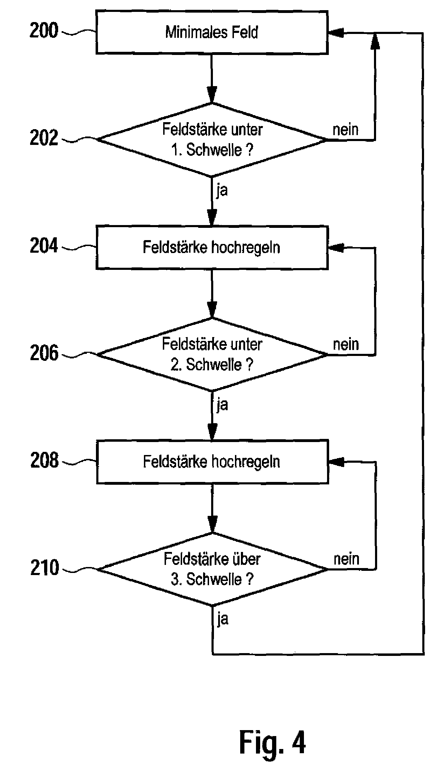

Die Figur 4 zeigt ein entsprechendes Flussdiagramm. In dem Schritt 200 wird das RFID-Lesegerät zunächst mit einer minimalen Feldstärke betrieben, d.h. beispielsweise mit der ersten Sendeleistung, bei der die Ansprechfeldstärke resultiert. Wenn das Dokument mit dem integrierten RFID-Transponder in die Reichweite des RFID-Lesegeräts gebracht wird, so wird dies aufgrund des daraus resultierenden Absinkens der Feldstärke unter den ersten Schwellwert von dem RFID-Lesegerät detektiert, indem die gemessene Feldstärke mit dem ersten Schwellwert verglichen wird (Schritt 202). Nach einer solchen Detektion wird zu dem Schritt 204 gegangen. In dem Schritt 204 wird die Sendeleistung auf die zweite Sendeleistung erhöht, sodass sich beispielsweise die zweite Betriebsfeldstärke einstellt. Im gegenteiligen Fall wird das RFID-Lesegerät weiterhin mit der zweiten Sendeleistung betrieben.

In dem Schritt 206 wird geprüft, ob die gemessene Feldstärke unter den zweiten Schwellwert gefallen ist. Wenn dies nicht der Fall ist, wird das RFID-Lesegerät weiterhin mit der zweiten Sendeleistung betrieben. Im gegenteiligen Fall wird in dem Schritt 208 die Sendeleistung auf die dritte Sendeleistung erhöht.

In dem Schritt 210 wird dann geprüft, ob die Feldstärke den dritten Schwellwert überschreitet. Wenn dies nicht der Fall ist, wird das RFID-Lesegerät weiterhin mit der dritten Sendeleistung betrieben. Im gegenteiligen Fall geht die Ablaufsteuerung zurück zum Schritt 200, sodass das RFID-Lesegerät dann wieder mit der ersten Sendeleistung betrieben wird, weil die Entfernung des Dokuments detektiert worden ist.

Dieses Verfahren kann beispielsweise durch den Regler 112 in den Ausführungsformen der Figuren 2 und 3 implementiert werden.

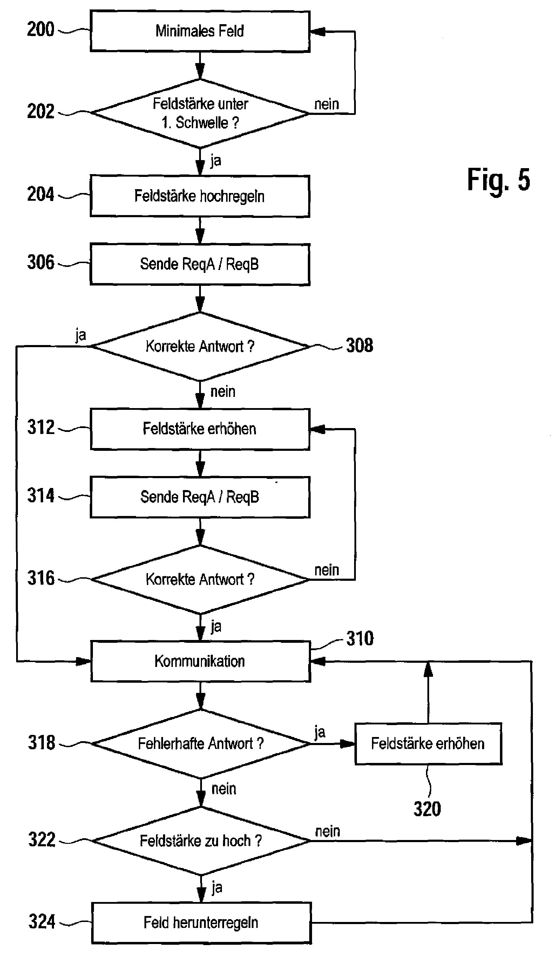

Die Figur 5 zeigt eine alternative Ausführungsform eines erfindungsgemäßen Verfahrens, wobei die Schritte 200 bis 204 dieses Verfahrens identisch zu denen der Ausführungsform der Figur 4 sein können. In dem auf den Schritt 204 folgenden Schritt 306 wird eine Anforderung an das Dokument gesendet, oder mehrere Anforderungen, wie zum Beispiel Request A und Request B, wenn nicht bekannt ist, welchen Typ das Dokument hat.

Diese Anforderung kann als Datensignal 256 gemäß den Ausführungsformen der Figuren 2 und 3 gesendet werden. Im Schritt 308 wird nun durch das RFID-Lesegerät geprüft, ob durch den Empfänger 114 eine korrekte Antwort auf die Anforderung von dem RFID-Transponder des Dokuments empfangen worden ist. Wenn dies der Fall ist, kann in dem Schritt 310 eine Datenkommunikation mit dem RFID-Transponder erfolgen, beispielsweise indem das RFID-Lesegerät wiederholend Anforderungen an den RFID-Transponder richtet, welche dieser beantwortet.

Für den Fall, dass die Prüfung in dem Schritt 308 ergibt, dass keine oder keine korrekte Antwort empfangen worden ist, geht die Ablaufsteuerung zu dem Schritt 312, in dem die Feldstärke erhöht wird, wie zum Beispiel um ein vorgegebenes Inkrement. Das Inkrement der Feldstärke kann beispielsweise 0,5 A/m betragen. Zur Erhöhung der Feldstärke um das Feldstärkeinkrement wird der Verstärkungsfaktor für den Verstärker 152 (vgl. die Ausführungsformen der Figuren 2 und 3) um ein entsprechendes Inkrement erhöht, um die Sendeleistung dementsprechend hochzusetzen. Diese Inkrement des Verstärkungsfaktors, dem ein Sendeleistungsinkrement entspricht, kann in dem Speicher 146 des Reglers 112 gespeichert sein.

In dem Schritt 314 wird von dem RFID-Lesegerät erneut die Anforderung gesendet und in dem Schritt 316 wird erneut geprüft, ob eine korrekte Antwort empfangen worden ist. Wenn dies wieder nicht der Fall ist, geht die Ablaufsteuerung zu dem Schritt 312 zurück, um die Feldstärke erneut zu erhöhen. Wenn dagegen die Prüfung in dem Schritt 316 ergibt, dass eine korrekte Antwort empfangen worden ist, so wird zu dem Schritt 310 übergegangen, da nunmehr eine für die Datenkommunikation mit dem RFID-Transponder ausreichende Betriebsfeldstärke eingeregelt worden ist.

Während der Datenkommunikation wird in dem Schritt 318 fortlaufend geprüft, ob auf eine Anforderung des RFID-Lesegeräts keine oder eine fehlerhafte Antwort von dem RFID-Transponder empfangen wird. Wenn dies der Fall ist, wird in dem Schritt 320 die Feldstärke nachgeregelt, beispielsweise indem die Feldstärke um ein Inkrement von zum Beispiel 0,5 A/m erhöht wird. Nach der Erhöhung der Feldstärke geht die Ablaufsteuerung zu dem Schritt 310 zurück, um die Datenkommunikation fortzuführen. Wenn die Erhöhung der Feldstärke in dem Schritt 320 nicht ausreichend war, so wird dies erneut in dem Schritt 318 dadurch detektiert, dass keine oder eine fehlerhafte Antwort von dem RFID-Transponder empfangen wird, sodass die Feldstärke in dem Schritt 320 solange inkrementiert wird, bis eine ausreichende Betriebsfeldstärke für die jeweils aktuell erforderliche Leistungsaufnahme des RFID-Transponders erreicht worden ist.

Für den Fall, dass die Überprüfung in dem Schritt 318 ergibt, dass korrekte Antworten empfangen werden, wird von Zeit zu Zeit versucht, die Feldstärke zu reduzieren. Beispielsweise erfolgt eine versuchsweise Reduktion der Feldstärke um ein oder mehrere Feldstärkeinkremente innerhalb vorgegebener Zeitintervalle oder nach einer vorgegebenen Anzahl von Anforderungen, die das RFID-Lesegerät gesendet hat. In dem Schritt 322 wird dann geprüft, ob trotz der reduzierten Feldstärke noch eine korrekte Datenkommunikation möglich ist, indem eine Anforderung von dem RFID-Lesegerät gesendet wird. Wird aufgrund dieser Anforderung eine korrekte Antwort erhalten, so kann die Feldstärke in der Tat reduziert werden, beispielsweise um ein weiteres Feldstärkeinkrement (Schritt 324).

Führt dagegen die Reduzierung der Feldstärke dazu, dass keine oder keine korrekte Antwort mehr von dem RFID-Transponder empfangen werden kann, so wird die versuchsweise Reduzierung der Feldstärke rückgängig gemacht und die Ablaufsteuerung geht direkt von dem Schritt 322 zu dem Schritt 310 zurück.

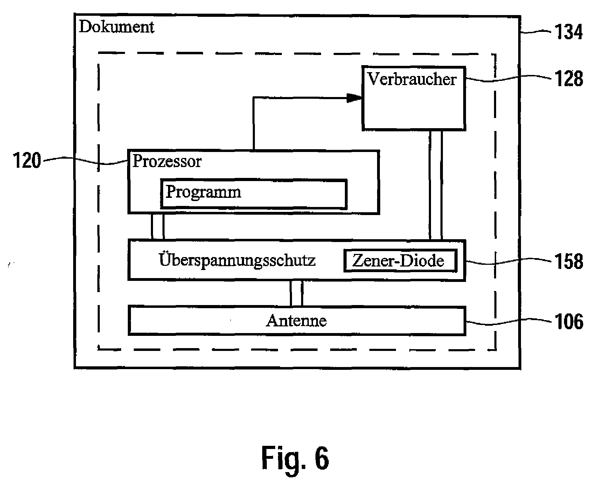

Die Figur 6 zeigt eine weitere Ausführungsform eines Dokuments 134. Bei dieser Ausführungsform ist zwischen der Antenne 106 und dem Prozessor 120 bzw. dem Verbraucher 128 ein Überspannungsschutz 158 angeordnet. Bei dem Überspannungsschutz 158 handelt es sich um eine Schaltung, die die an dem Prozessor 120 bzw. an dem Verbraucher 128 anliegende Spannung auf ein Maximum begrenzen soll, um eine Zerstörung des Prozessors 120 bzw. des Verbrauchers 128 durch eine zu hohe Spannung zu vermeiden. Hierzu kann die Schaltung eine Zenerdiode 160 beinhalten, wobei eine Durchbruchspannung der Zenerdiode dann erreicht wird, wenn eine maximale Spannung für den Prozessor bzw. den Verbraucher 128 erreicht wird. Aufgrund des Erreichens der Durchbruchspannung der Zenerdiode steigt dann die sekundärseitige Last, welche durch das Dokument 134 gebildet wird, stark an.

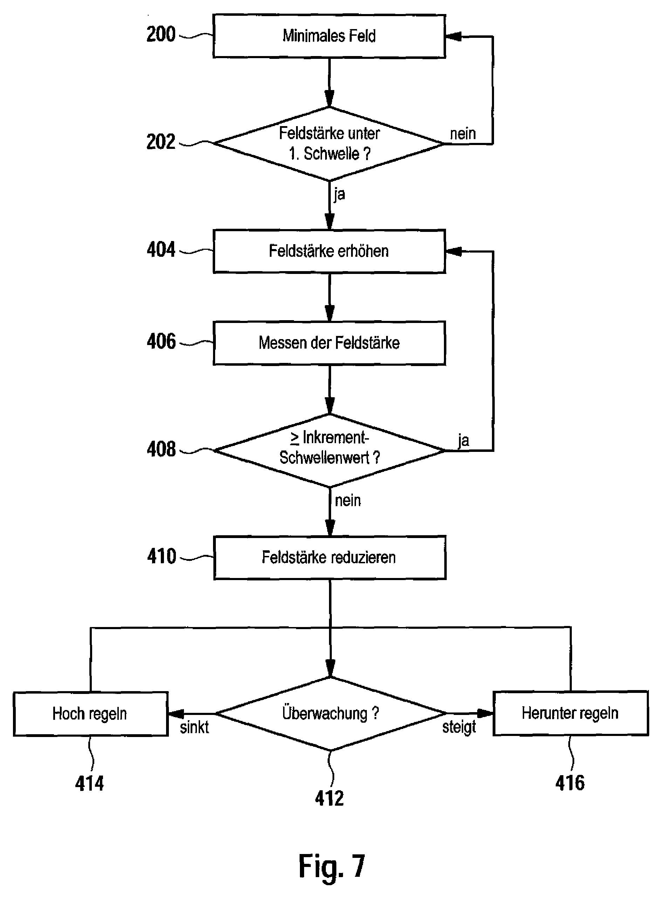

Die Figur 7 zeigt eine weitere Ausführungsform eines erfindungsgemäßen Verfahrens, welche besonders für ein Dokument des Typs der Ausführungsform gemäß Figur 6 geeignet ist.

Die Schritte 200 und 202 können identisch zu den Ausführungsformen gemäß den Figuren 4 und 5 ausgebildet sein. In dem auf den Schritt 202 folgenden Schritt 404 wird die Sendeleistung um ein vorgegebenes Sendeleistungsinkrement erhöht, um die Feldstärke zu erhöhen.

In dem Schritt 406 wird das aufgrund der Erhöhung der Sendeleistung um das Sendeleistungsinkrement resultierende Inkrement der Feldstärke gemessen und in dem Schritt 408 mit einem vorgegebenen Inkrement-Schwellwert verglichen. Solange der Inkrement-Schwellwert von dem Feldstärkeinkrement nicht unterschritten wird, wird die Feldstärke schrittweise um weitere Feldstärkeinkremente erhöht, indem die Ablaufsteuerung von dem Schritt 408 zu dem Schritt 404 übergeht.

Liegt dagegen das Feldstärkeinkrement unterhalb des Inkrement-Schwellwerts, so bedeutet dies ein starkes Ansteigen der sekundärseitigen Last, weiche durch das Ansprechen des Überspannungsschutzes (vgl. Überspannungsschutz 158 der Ausführungsform der Figur 6) verursacht wird. In diesem Fall geht die Ablaufsteuerung von dem Schritt 408 zu dem Schritt 410, wo die Feldstärke um ein oder mehrere Feldstärkeinkremente reduziert wird, um so die Betriebsfeldstärke einzustellen.

Die so ermittelte Betriebsfeldstärke dient im Weiteren als Sollgröße für die Regelung der Sendeleistung: In dem Schritt 412 wird die Feldstärke fortwährend gemessen und mit dem Sollwert verglichen. Wenn die gemessene Feldstärke unterhalb des Sollwerts liegt, so geht die Ablaufsteuerung zu dem Schritt 414, um die Sendeleistung dementsprechend nachzuregeln, d.h. beispielsweise um die Sendeleistung um ein Sendeleistungsinkrement zu erhöhen. Im gegenteiligen Fall wird die Sendeleistung in dem Schritt 416 reduziert, beispielsweise um ein Sendeleistungsinkrement. Durch diese Regelung wird sichergestellt, dass bei einer schwankenden sekundärseitigen Last immer die Betriebsfeldstärke erreicht wird.

### Bezugszeichenliste

- 100: RFID-System
- 102: RFID-Lesegerät
- 104: Antenne
- 105: Antenne
- 106: Antenne
- 108: RFID-Transponder
- 110: Sender
- 112: Regler
- 114: Empfänger
- 116: Komponente
- 118: Signal
- 120: Prozessor
- 122: Programminstruktionen
- 124: Speicher
- 126: Daten
- 128: Verbraucher
- 130: Leitungen
- 132: Leitungen
- 134: Dokument
- 136: Schwingkreis
- 138: Widerstand
- 140: Widerstand
- 142: Hüllkurven-Detektor
- 144: Analog/Digital-Wandler
- 146: Speicher
- 148: Prozessor
- 150: Programminstruktionen
- 152: Verstärker
- 154: Oszillator
- 156: Datensignal
- 158: Überspannungsschutz

## Patentansprüche

1. RFID-Lesegerät mit
- Sendemitteln (110) zur Erzeugung eines Feldes zur induktiven Kopplung mit einem RFID-Transponder (108),
- Messungsmitteln (116) zur Messung einer Feldstärke des Felds durch Erzeugung eines digitalen Signals (18) aus einer von einem Spannungsteiler mit zwei Widerständen (138, 140) an einer Antenne (104; 105) eines Schwingkreises (136) abgegriffenen Spannung über einen Hüllkurvendetektor (142) und einen Analog/Digital-Wandler (144), wobei das digitale Signal (18) den aktuellen Wert der Spannung und damit der erzeugten Feldstärke repräsentiert,
- Regelungsmitteln (112) zur Regelung der Sendeleistung in Abhängigkeit von der gemessenen Feldstärke, wobei das digitale Signal (18) in die Reglungsmittel (112) als Messgröße für die Durchführung der Regelung eingegeben wird.

2. RFID-Lesegerät nach Anspruch 1, wobei die Regelungsmittel so ausgebildet sind, dass die Sendemittel mit einer ersten Sendeleistung betrieben werden, sodass eine erste Feldstärke resultiert, wobei die erste Feldstärke mit einem ersten Schwellwert verglichen wird, und dass die Sendemittel mit einer zweiten Sendeleistung betrieben werden, wenn der erste Schwellwert unterschritten wird, wobei die zweite Sendeleistung größer als die erste Sendeleistung ist, sodass die aufgrund der zweiten Sendeleistung resultierende zweite Feldstärke größer als der erste Schwellwert ist.

3. RFID-Lesegerät nach Anspruch 2, wobei die erste Feldstärke größer oder gleich einer Ansprechfeldstärke des RFID-Transponders ist, und wobei die erste Feldstärke kleiner als eine Betriebsfeldstärke des RFID-Transponders ist.

4. RFID-Lesegerät nach Anspruch 3, wobei es sich bei der zweiten Feldstärke um die Betriebsfeldstärke handelt.

5. RFID-Lesegerät nach Anspruch 2, 3 oder 4, wobei die erste Sendeleistung zwischen 10 mW und 50 mW beträgt und wobei die erste Feldstärke zwischen 0,5 A/m und 1 A/m beträgt, und/oder wobei die zweite Sendeleistung 90 mW bis 110 mW, insbesondere 100 mW, oder 190 mW bis 210 mW, insbesondere 200 mW, beträgt, und/oder wobei die zweite Feldstärke zwischen 1,5 A/m und 2,5 A/m, insbesondere 2 A/m, beträgt.

6. RFID-Lesegerät nach einem der vorhergehenden Ansprüche 2 bis 5, wobei die Regelungsmittel so ausgebildet sind, dass die gemessene Feldstärke mit einem zweiten Schwellwert verglichen wird, und dass die Sendemittel mit einer dritten Sendeleistung betrieben werden, wenn der zweite Schwellwert unterschritten wird, wobei die dritte Sendeleistung größer als die zweite Sendeleistung ist.

7. RFID-Lesegerät nach Anspruch 6, wobei die dritte Sendeleistung mindestens 600 mW beträgt, insbesondere 700 mW, und wobei die dritte Feldstärke mindestens 6 A/m beträgt, insbesondere 7 A/m bis 12 A/m.

8. RFID-Lesegerät nach einem der vorhergehenden Ansprüche 2 bis 7, wobei die Regelungsmittel so ausgebildet sind, dass die gemessene Feldstärke mit einem dritten Schwellwert verglichen wird, und dass die Sendemittel mit der ersten Sendeleistung betrieben werden, wenn der dritte Schwellwert überschritten wird.

9. RFID-Lesegerät nach einem der Ansprüche 1 bis 5, mit Empfangsmitteln zum Empfang einer Antwort von dem RFID-Transponder aufgrund einer von den Sendemitteln gesendeten Anforderung, wobei die Regelungsmittel so ausgebildet sind, dass die Sendeleistung nach Unterschreitung des ersten Schwellwerts solange schrittweise erhöht wird, bis auf eine von den Sendemitteln gesendete Anforderung eine korrekte Antwort von dem RFID-Transponder empfangen wird, wobei die Regelungsmittel vorzugsweise so ausgebildet sind, dass die Sendeleistung solange schrittweise reduziert wird, bis auf eine von den Sendemitteln gesendete Anforderung von dem RFID-Transponder keine korrekte Antwort empfangen wird, wobei wenn dieser Fall eintritt, die Sendeleistung wieder um zumindest einen Schritt erhöht wird.

10. RFID-Lesegerät nach einem der Ansprüche 1 bis 5, wobei die Regelungsmittel so ausgebildet sind, dass nach Unterschreitung des ersten Schwellwerts die Sendeleistung um vorgegebene Sendeleistungsinkremente schrittweise erhöht wird, wobei das durch ein Sendeleistungsinkrement hervorgerufene Feldstärkeinkrement mit einem Inkrement-Schwellwert verglichen wird, wobei die Erhöhung der Sendeleistung in Sendeleistungsinkrementen solange erfolgt, wie das Feldstärkeinkrement, welches durch ein Sendeleistungsinkrement hervorgerufen wird, größer oder gleich dem Inkrement-Schwellwert ist, wobei die Regelungsmittel vorzugsweise so ausgebildet sind, dass die Sendeleistung um zumindest ein Sendeleistungsinkrement reduziert wird, wenn der Inkrement-Schwellwert unterschritten wird, wobei die Regelungsmittel vorzugsweise so ausgebildet sind, dass der nach der schrittweisen Erhöhung der Sendeleistung eingeregelte Sendeleistungswert als Soll-Wert für die weitere Regelung der Sendeleistung verwendet wird.

11. RFID-System mit einem RFID-Lesegerät nach einem der vorhergehenden Ansprüche und mit einem Dokument, welches den RFID-Transponder beinhaltet, wobei es sich bei dem RFID-Transponder vorzugsweise um einen passiven RFID-Transponder handelt.

12. RFID-System nach Anspruch 11, wobei das Dokument einen Verbraucher aufweist, der über den RFID-Transponder mit elektrischer Energie versorgbar ist, wobei der Verbraucher eine zeitlich veränderliche Leistungsaufnahme hat, wobei es sich bei dem Verbraucher vorzugsweise um eine Anzeigevorrichtung oder einen Sensor, insbesondere einen Sensor zur Erfassung eines biometrischen Merkmals, handelt.

13. Verfahren zur Regelung der Sendeleistung eines RFID-Lesegeräts (102), wobei das RFID-Lesegerät Sendemittel (110) zur Erzeugung eines Feldes zur induktiven Kopplung mit einem RFID-Transponder (108) aufweist, mit folgenden Schritten:
- Betrieb des RFID-Lesegeräts mit einer ersten Sendeleistung, sodass sich eine erste Feldstärke einstellt, solange sich der RFID-Transponder nicht innerhalb der Reichweite der Sendemittel befindet,
- Messung der Feldstärke zur Detektion einer Einbringung des RFID-Transponders in die Reichweite der Sendemittel, wobei aufgrund der Einbringung des RFID-Transponders in die Reichweite der Sendemittel die gemessene Feldstärke unter einen ersten Schwellwert sinkt, wobei die Feldstärke des Felds durch Messungsmitteln (116) des RFID-Lesegeräts (102) gemessen wird, die ein digitales Signal (18) aus einer von einem Spannungsteiler mit zwei Widerständen (138, 140) an einer Antenne (104; 105) eines Schwingkreises (136) abgegriffenen Spannung über einen Hüllkurvendetektor (142) und einen Analog/Digital-Wandler (144) erzeugen, wobei das digitale Signal (18) den aktuellen Wert der Spannung und damit der Feldstärke repräsentiert, wobei das digitale Signal (18) in Reglungsmittel (112) des RFID-Lesegeräts (102) zur Regelung der Sendeleistung in Abhängigkeit von der gemessenen Feldstärke als Messgröße für die Durchführung einer Regelung eingegeben wird,
- Betrieb des RFID-Lesegeräts mit einer zweiten Sendeleistung, wenn die gemessene Feldstärke den ersten Schwellwert unterschritten hat, wobei die zweite Sendeleistung größer als die erste Sendeleistung ist.

14. Verfahren nach Anspruch 13, mit folgenden weiteren Schritten:
- Messung der Feldstärke nach der Erhöhung auf die zweite Sendeleistung,
- Vergleich der gemessenen Feldstärke mit einem zweiten Schwellwert,
- Betrieb des RFID-Lesegeräts mit einer dritten Sendeleistung, wenn die gemessene Feldstärke unter den zweiten Schwellwert abfällt, und/oder
mit folgenden weiteren Schritten:
- Messung der Feldstärke nach der Erhöhung der Sendeleistung auf die dritte Sendeleistung,
- Vergleich der gemessenen Feldstärke mit einem dritten Schwellwert,
- Betrieb des RFID-Lesegeräts mit der ersten Sendeleistung, wenn die gemessene Feldstärke den dritten Schwellwert überschreitet, und/oder
mit folgenden weiteren Schritten:
- wiederholte Sendung einer Anforderung von dem RFID-Lesegerät an den RFID-Transponder aufgrund einer Unterschreitung des ersten Schwellwerts,
- schrittweise Erhöhung der Sendeleistung solange bis aufgrund einer der Anforderungen eine Antwort von dem RFID-Transponder durch das RFID-Lesegerät korrekt empfangen wird, und/oder
mit folgenden weiteren Schritten:
- schrittweise Reduzierung der Sendeleistung solange bis auf eine der gesendeten Anforderungen keine korrekte Antwort empfangen wird,
- Erhöhung der Sendeleistung aufgrund des Empfangs einer nichtkorrekten Antwort, und/oder
mit folgenden weiteren Schritten:
- schrittweise Erhöhung der Sendeleistung in vorgegebenen Sendeleistungsinkrementen aufgrund einer Unterschreitung des ersten Schwellwerts,
- wenn ein aufgrund eines Sendeleistungsinkrements resultierendes Feldstärkeinkrement kleiner als ein vorgegebener Inkrement-Schwellwert ist, Reduzierung der Sendeleistung um zumindest ein Sendeleistungsinkrement, und/oder
wobei die nach der Reduzierung um zumindest ein Sendeleistungsinkrement gemessene Feldstärke als Soll-Wert für die weitere Regelung der Sendeleistung verwendet wird.

15. Computerprogrammprodukt, insbesondere digitales Speichermedium, mit von einem RFID-Lesegerät ausführbaren Programminstruktionen zur Durchführung eines Verfahrens, nach einem der vorhergehenden Ansprüche 13 oder 14.

## Claims

1. An RFID reader comprising
- transmitting means (110) for generating a field for inductive coupling with an RFID transponder (108),
- measuring means (116) for measuring a field strength of the field by a generating a digital signal (18) from a voltage tapped from a voltage divider having two resistors (138, 140) at an antenna (104; 105) of a resonant circuit (136) via an envelope detector (142) and an analog/digital converter (144), wherein the digital signal (18) represents the current value of the voltage and therefore the generated field strength,
- control means (112) for controlling the transmitting power depending on the measured field strength, wherein the digital signal (18) is input into the control means (112) as a measurand for carrying out the control.

2. The RFID reader according to claim 1, wherein the control means are designed such that the transmitting means are operated with a first transmitting power so that a first field strength results, wherein the first field strength is compared with a first threshold value, and such that the transmitting means are operated with a second transmitting power when the first threshold value is undershot, wherein the second transmitting power is greater than the first transmitting power so that the second field strength resulting on account of the second transmitting power is greater than the first threshold value.

3. The RFID reader according to claim 2, wherein the first field strength is greater than or equal to an activation field strength of the RFID transponder, and wherein the first field strength is less than an operating field strength of the RFID transponder.

4. The RFID reader according to claim 3, wherein the second field strength is the operating field strength.

5. The RFID reader according to claim 2, 3 or 4, wherein the first transmitting power is between 10 mW and 50 mW, and wherein the first field strength is between 0.5 A/m and 1 A/m, and/or wherein the second transmitting power is 90 mW to 110 mW, in particular 100 mW, or 190 mW to 210 mW, in particular 200 mW, and/or wherein the second field strength is between 1.5 A/m and 2.5 A/m, in particular 2 A/m.

6. The RFID reader according to any one of the preceding claims 2 to 5, wherein the control means are designed such that the measured field strength is compared with a second threshold value, and such that the transmitting means are operated with a third transmitting power when the second threshold value is undershot, wherein the third transmitting power is greater than the second transmitting power.

7. The RFID reader according to claim 6, wherein the third transmitting power is at least 600 mW, in particular 700 mW, and wherein the third field strength is at least 6 A/m, in particular 7 A/m to 12 A/m.

8. The RFID reader according to any one of the preceding claims 2 to 7, wherein the control means are designed such that the measured field strength is compared with a third threshold value, and such that the transmitting means are operated with the first transmitting power when the third threshold value is exceeded.

9. The RFID reader according to any one of claims 1 to 5, comprising receiving means for receiving a response from the RFID transponder due to a request sent by the transmitting means, wherein the control means are designed such that the transmitting power, after the first threshold value is undershot, is increased in steps until a correct response to a request sent by the transmitting means is received from the RFID transponder, wherein the control means are preferably designed such that the transmitting power is reduced in steps until a correct response to a request sent by the transmitting means is received from the RFID transponder, wherein when this is the case the transmitting power is increased again by at least one step.

10. The RFID reader according to any one of claims 1 to 5, wherein the control means are designed such that, after the first threshold value has been undershot, the transmitting power is increased in steps by predefined transmitting power increments, wherein the field strength increment caused by a transmitting power increment is compared with an increment threshold value, wherein the increase of the transmitting power in transmitting power increments is continued until the field strength increment caused by a transmitting power increment is greater than or equal to the increment threshold value, wherein the control means are preferably designed such that the transmitting power is reduced by at least one transmitting power increment when the increment threshold value is undershot, wherein the control means are preferably designed such that the transmitting power value adjusted after the stepwise increase of the transmitting power is used as a setpoint value for the further control of the transmitting power.

11. An RFID system comprising an RFID reader according to any one of the preceding claims and comprising a document which contains the RFID transponder, wherein the RFID transponder is preferably a passive RFID transponder.

12. The RFID system according to claim 11, wherein the document comprises a load which can be supplied with electrical energy via the RFID transponder, wherein the power consumption of the load changes over time, wherein the load is preferably a display device or a sensor, in particular a sensor for detecting a biometric feature.

13. A method for controlling the transmitting power of an RFID reader (102), wherein the RFID reader has transmitting means (110) for generating a field for inductive coupling with an RFID transponder (108), comprising the following steps:
- operating the RFID reader with a first transmitting power so that a first field strength is set, as long as the RFID transponder is not within the range of the transmitting means,
- measuring the field strength for detecting the introduction of the RFID transponder into the range of the transmitting means, wherein, due to the introduction of the RFID transponder into the range of the transmitting means, the measured field strength drops below a first threshold value, wherein the field strength of the field is measured by measurement means (116) of the RFID reader (102) which generate a digital signal (18) from a voltage tapped from a voltage divider having two resistors (138, 140) at an antenna (104; 105) of a resonant circuit (136) via an envelope detector (142) and an analog/digital converter (144), wherein the digital signal (18) represents the current value of the voltage and therefore the field strength, wherein the digital signal (18) is input into control means (112) of the RFID reader (102) in order to control the transmitting power depending on the measured field strength as a measurand for carrying out a control operation,
- operating the RFID reader with a second transmitting power when the measured field strength has undershot the first threshold value, wherein the second transmitting power is greater than the first transmitting power.

14. The method according to claim 13, comprising the following further steps:
- measuring the field strength after the increase to the second transmitting power,
- comparing the measured field strength with a second threshold value,
- operating the RFID reader with a third transmitting power when the measured field strength drops below the second threshold value, and/or
comprising the following further steps:
- measuring the field strength after the increase of the transmitting power to the third transmitting power,
- comparing the measured field strength with a third threshold value,
- operating the RFID reader with the first transmitting power when the measured field strength exceeds the third threshold value, and/or
comprising the following further steps:
- repeatedly transmitting a request from the RFID reader to the RFID transponder on account of an undershoot of the first threshold value,
- increasing the transmitting power in steps until a response from the RFID transponder due to one of the requests is correctly received by the RFID reader, and/or
comprising the further steps:
- reducing the transmitting power in steps until no correct response to one of the transmitted requests is received,
- increasing the transmitting power due to the receipt of a non-correct response, and/or
comprising the following further steps:
- increasing the transmitting power in steps in predefined transmitting power increments due to an undershoot of the first threshold value,
- when a field strength increment resulting on account of a transmitting power increment is less than a predefined increment threshold value, reducing the transmitting power by at least one transmitting power increment, and/or
wherein the field strength measured after the reduction by at least one transmitting power increment is used as a setpoint value for the further control of the transmitting power.

15. A computer program product, in particular a digital storage medium, comprising program instructions executable by an RFID reader for carrying out a method according to either one of the preceding claims 13 or 14.

## Revendications

1. Lecteur RFID avec
- des moyens émetteurs (110) pour la création d'un champ pour le couplage inductif avec un transpondeur RFID (108),
- des moyens de mesure (116) pour la mesure d'une intensité de champ du champ par la création d'un signal numérique (18) à partir d'une tension saisie sur une antenne (104 ; 105) d'un circuit oscillant (136) par un diviseur de tension avec deux résistances (138, 140) par l'intermédiaire d'un détecteur d'enveloppe (142) et d'un convertisseur analogique-numérique (144), où le signal numérique (18) représente la valeur actuelle de la tension et par conséquent l'intensité de champ créé,
- des moyens de régulation (112) pour la régulation de la puissance d'émission en fonction de l'intensité de champ mesurée, où le signal numérique (18) est indiqué en tant que grandeur de mesure pour l'exécution de la régulation dans les moyens de régulation (112).

2. Lecteur RFID selon la revendication 1, dans lequel les moyens de régulation sont conçus de telle manière que les moyens émetteurs fonctionnent avec une première puissance d'émission, de sorte qu'il en résulte une première intensité de champ, où la première intensité de champ est comparée avec une première valeur de seuil, et que les moyens émetteurs fonctionnent avec une deuxième puissance d'émission lorsque l'on est en-dessous de la première valeur de seuil, où la deuxième puissance d'émission est supérieure à la première puissance d'émission de sorte que la deuxième intensité de champ résultant en raison de la deuxième puissance d'émission est supérieure à la première valeur de seuil.

3. Lecteur RFID selon la revendication 2, dans lequel la première intensité de champ est supérieure ou égale à une intensité de champ de réponse du transpondeur RFID, et dans lequel une première intensité de champ est inférieure à une intensité de champ de fonctionnement du transpondeur RFID.

4. Lecteur RFID selon la revendication 3, dans lequel il s'agit d'une intensité de champ de fonctionnement dans le cas de la deuxième intensité de champ.

5. Lecteur RFID selon les revendications 2, 3 ou 4, dans lequel la première puissance d'émission se situe entre 10 mW et 50 mW et dans lequel la première intensité de champ se situe entre 0,5 A/m et 1 A/m, et/ou dans lequel la deuxième puissance d'émission est de 90 mW à 110 mW, notamment de 100 mW, ou est de 190 mW à 210 mW, notamment de 200 mW, et/ou dans lequel la deuxième intensité de champ est entre 1,5 A/m et 2,5 A/m, notamment de 2 A/m.

6. Lecteur RFID selon l'une des revendications précédentes 2 à 5, dans lequel les moyens de régulation sont conçus de sorte que l'intensité de champ mesurée est comparée avec une deuxième valeur de seuil, et que les moyens émetteurs sont mis en oeuvre avec une troisième puissance d'émission, lorsque l'on est en-dessous de la deuxième valeur de seuil, où la troisième puissance d'émission est supérieure à la deuxième puissance d'émission.

7. Lecteur RFID selon la revendication 6, dans lequel la troisième puissance d'émission se situe à au minimum 600 mW, notamment à 700 mW, et dans lequel la troisième intensité de champ se situe à au minimum 6 A/m, notamment de 7 A/m à 12 A/m.

8. Lecteur RFID selon l'une des revendications précédentes 2 à 7, dans lequel les moyens de régulation sont conçus de telle manière que l'intensité de champ mesurée est comparée avec une troisième valeur de seuil, et que les moyens d'émission sont mis en oeuvre avec la première puissance d'émission lorsque l'on est au-dessus de la troisième valeur de seuil.

9. Lecteur RFID selon l'une des revendications 1 à 5, avec des moyens de réception pour la réception d'une réponse du transpondeur RFID en raison d'une commande envoyée par les moyens émetteurs, où les moyens de régulation sont conçus de manière que la puissance d'émission est augmentée pas à pas après le passage en dessous de la première valeur de seuil jusqu'à ce qu'une réponse correcte à la commande envoyée par les moyens d'émission soit réceptionnée par le transpondeur RFID, où les moyens de régulation sont de préférence conçus de manière à ce que la puissance d'émission soit réduite pas à pas jusqu'à ce qu'une réponse correcte à une commande envoyée par les moyens d'émission soit reçue par le transpondeur RFID, où si ce cas se présente, la puissance d'émission est de nouveau augmentée d'au moins un pas.

10. Lecteur RFID selon l'une des revendications 1 à 5, dans lequel les moyens de régulation sont conçus de sorte qu'après une valeur inférieure à la première valeur de seuil, la puissance d'émission est augmentée pas à pas par des incréments de puissance d'émission prédéfinis, où l'incrément d'intensité de champ induit par un incrément de puissance d'émission est comparé à une valeur de seuil d'incrément, où l'augmentation de la puissance d'émission par incrément de puissance d'émission, ainsi que par incrément d'intensité de champ, lequel est induit par l'incrément de puissance d'émission, est effectuée jusqu'à ce qu'elle soit supérieure ou égale à la valeur de seuil d'incrément, où les moyens de régulation sont de préférences conçus de manière à ce que la puissance d'émission soit réduite d'au moins un incrément de puissance d'émission lorsque l'on est en dessous de la valeur de seuil d'incrément, où les moyens de régulation sont conçus de préférence pour qu'après l'augmentation pas à pas de la puissance d'émission, une valeur de puissance d'émission régulée est employée en tant que valeur de consigne pour une autre régulation de la puissance d'émission,

11. Système RFID avec un lecteur RFID selon l'une des revendications précédentes et un document, lequel contient un transpondeur RFID, où il s'agit de préférence d'un transpondeur RFID passif dans le cas du transpondeur RFID.

12. Système RFID selon la revendication 11, dans lequel le document présente un utilisateur qui peut être alimenté avec de l'énergie électrique par l'intermédiaire du transpondeur RFID, où l'utilisateur a une consommation variable dans le temps, où il s'agit, dans le cas de l'utilisateur, de préférence d'un dispositif d'affichage ou d'un capteur, notamment un capteur pour la détection d'une caractéristique biométrique.

13. Procédé de régulation de la puissance d'émission d'un lecteur RFID (102), où le lecteur RFID présente des moyens émetteurs (110) pour la création d'un champ pour le couplage inductif avec un transpondeur RFID (108), avec les étapes suivantes :
- fonctionnement du lecteur RFID avec une première puissance d'émission de sorte qu'une intensité de champ s'établisse tant que le transpondeur RFID ne se trouve pas dans la portée des moyens émetteurs,
- mesure de l'intensité de champ pour la détection de la mise en place du transpondeur RFID dans la portée des moyens émetteurs, où, en raison de la mise en place du transpondeur RFID dans la portée des moyens émetteurs, l'intensité de champ mesurée descend en dessous d'une première valeur de seuil, où l'intensité de champ du champ est mesurée par des moyens de mesure (116) du lecteur RFID (102), qui génèrent un signal numérique (18) à partir d'une tension saisie sur une antenne (104 ; 105) d'un circuit oscillant (136) par un diviseur de tension avec deux résistances (138, 140) par l'intermédiaire d'un détecteur d'enveloppe (142) et d'un convertisseur analogique-numérique (144), où le signal numérique (18) représente la valeur actuelle de la tension et par conséquent de l'intensité de champ, où le signal numérique (18) est indiqué en tant que grandeur de mesure pour l'exécution d'une régulation dans des moyens de régulation (112) du lecteur RFID (102) pour la régulation de la puissance d'émission en fonction des intensités de champ mesurées.
- fonctionnement du lecteur RFID avec une deuxième puissance d'émission lorsque l'intensité du champ mesurée a atteint une valeur en dessous de la première valeur de seuil, où la deuxième puissance d'émission est supérieure à la première puissance d'émission.

14. Procédé selon la revendication 15, avec d'autres étapes postérieures :
- de mesure de l'intensité de champ après l'augmentation jusqu'à la deuxième puissance d'émission,
- de comparaison de l'intensité de champ mesurée avec une deuxième valeur de seuil,
- de fonctionnement du lecteur RFID avec une troisième puissance d'émission, lorsque l'intensité de champ mesurée diminue en dessous de la deuxième valeur de seuil, et/ou
avec les autres étapes postérieures :
- de mesure de l'intensité de champ après l'augmentation de la puissance d'émission jusqu'à la troisième puissance d'émission,
- de comparaison de l'intensité de champ mesurée avec une troisième valeur de seuil,
- de fonctionnement du lecteur RFID avec la première puissance d'émission lorsque l'intensité de champ dépasse la troisième valeur de seuil, et/ou
avec les autres étapes postérieures :
- d"émission répétée d'une demande du lecteur RFID vers le transpondeur RFID en raison d'une sous-évaluation par rapport à la première valeur de seuil,
- d'augmentation pas à pas de la puissance d'émission jusqu'à ce qu'une réponse du transpondeur RFID est reçue correcte par le lecteur RFID en raison d'une demande, et/ou
avec les autres étapes postérieures :
- de réduction pas à pas de la puissance d'émission jusqu'à ce qu'aucune réponse correcte n'est reçue suite à la demande envoyée,
- d'augmentation de la puissance d'émission en raison de la réception d'une réponse non correcte, et/ou
avec les autres étapes postérieures :
- d'augmentation pas à pas de la puissance d'émission par des incréments de puissance d'émission prédéfinis en raison d'une sous-évaluation par rapport à la première valeur de seuil,
- lorsqu'un incrément d'intensité de champ résultant d'un incrément de puissance d'émission est plus petit qu'une valeur de seuil d'incrément prédéfinie, de réduction de la puissance d'émission d'au moins un incrément de puissance d'émission, et/ou
où l'intensité de champ mesurée après la réduction d'au moins un incrément de puissance d'émission est employée en tant que valeur de consigne pour la régulation ultérieure de la puissance d'émission.

15. Produit-programme d'ordinateur, notamment support de stockage numérique, avec des instructions de programme exécutables par un lecteur RFID pour l'exécution d'un procédé selon l'une des revendications précédentes 13 ou 14.
